Europäisches Patentamt

**European Patent Office**

Office européen des brevets

(19)

(11) Numéro de publication: **0 104 158**
**A1**

## (12) DEMANDE DE BREVET EUROPEEN

(21) Numéro de dépôt: **83870079.7**

(22) Date de dépôt: **17.08.83**

(51) Int. Cl.³: **F 03 B 13/12**

(30) Priorité: **20.08.82 BE 208848**

(43) Date de publication de la demande:
**28.03.84 Bulletin 84/13**

(84) Etats contractants désignés:
**AT CH DE FR GB IT LI LU NL SE**

(71) Demandeur: **Louis, André**
**Rue Félix de Keuster, 27**
**Woluwé-Saint-Pierre(BE)**

(72) Inventeur: **Louis, André**
**Rue Félix de Keuster, 27**
**Woluwé-Saint-Pierre(BE)**

(74) Mandataire: **Thirion, Robert et al,**
**Bureau GEVERS S.A. 7, rue de Livourne Bte 1**
**B-1050 Bruxelles(BE)**

(54) **Procédé de transformation d'énergie hydraulique et installation pour la mise en oeuvre de ce procédé.**

(57) Procédé de transformation d'énergie hydraulique consistant à associer un poids 1 à un flotteur 2, plongé dans un liquide à niveau variable, lorsque le liquide est à son niveau minimum, à élever le poids grâce au flotteur, à le libérer du flotteur avant la descente du liquide, à autoriser sa descente indépendamment du niveau du liquide et à récupérer l'énergie produite par cette descente, et installation pour la mise en oeuvre du procédé.

FIG.1

EP 0 104 158 A1

"Procédé de transformation d'énergie hydraulique et installation pour la mise en oeuvre de ce procédé"

La présente invention est relative à un procédé de transformation d'énergie hydraulique.

L'invention a pour but de procurer un procédé simple dont la mise en oeuvre peut être assurée, pour transformer l'énergie hydraulique en énergie mécanique ou électrique, sans investissements coûteux dans tous les sites où un liquide subit des variations de niveau successives et en sens contraires, tels que sites en bord de mer ou d'océan soumis à des marées d'amplitudes non négligeables, sites où un réservoir peut être alimenté en eau courante pour que le liquide atteigne un niveau maximum et vidé par gravité pour que le liquide occupe un niveau minimum et ainsi de suite.

A cet effet, suivant l'invention, on associe au moins un poids à au moins un flotteur, plongé dans un liquide à niveau variable passant successivement d'un minimum à un maximum et vice versa, quand le liquide est à son niveau minimum, on élève ce poids à l'aide du flotteur grâce à la montée du liquide, on libère ce poids du flotteur, avant la descente du liquide, lorsque ledit poids a été amené à une hauteur déterminée et on autorise la descente du poids qui s'effectue sous l'effet de la pesanteur et indépendamment du niveau du liquide et on récupère l'énergie produite par cette descente.

Le procédé suivant l'invention, qui permet la transformation de l'énergie hydraulique en discontinu, prévoit l'accumulation de cette énergie hydraulique qui peut être restituée quand le besoin s'en fait sentir.

Suivant l'invention, pour accumuler de l'énergie, on bloque le poids libéré du flotteur au niveau où il a été amené par ce flotteur quand le liquide a atteint son niveau maximum, on associe à nouveau le poids au flotteur quand le liquide est à son niveau minimum, on débloque le poids pour qu'il subisse une nouvelle élévation pendant que le liquide passe de son niveau minimum à son niveau maximum et on recommence l'opération jusqu'à ce que le poids ait atteint une hauteur déterminée.

Le procédé suivant l'invention vise également la transformation d'énergie hydraulique en continu.

Pour ce faire, on prévoit, suivant l'invention, au moins deux réservoirs reliés entre eux pour que le niveau de liquide soit maximum dans l'un quand il est minimum dans l'autre et vice versa et on dispose dans chacun de ces réservoirs au moins un flotteur associé à au moins un poids de sorte que le poids libéré, quand le liquide a atteint son niveau maximum dans un des réservoirs, descend pour céder son énergie pendant que le poids de l'autre réservoir s'élève entraîné par son flotteur.

L'invention a également pour objet une installation pour la mise en oeuvre du procédé susdit.

D'autres détails et particularités de l'invention ressortiront de la description des dessins, annexés au présent mémoire, qui illustrent le procédé suivant l'invention et représentent, à titre d'exemples non limitatifs, des formes de réalisation particulières de l'installation suivant l'invention.

La figure 1 est une vue schématique illustrant le procédé susdit pour la transformation en discontinu de l'énergie hydraulique et montre une installation pour la mise en oeuvre du procédé.

Les figures 2 et 3 sont des vues analogues à la figure 1 et illustrent des variantes du procédé et de l'installation suivant l'invention.

Dans les différentes figures, les mêmes notations de référence désignent des éléments identiques ou analogues.

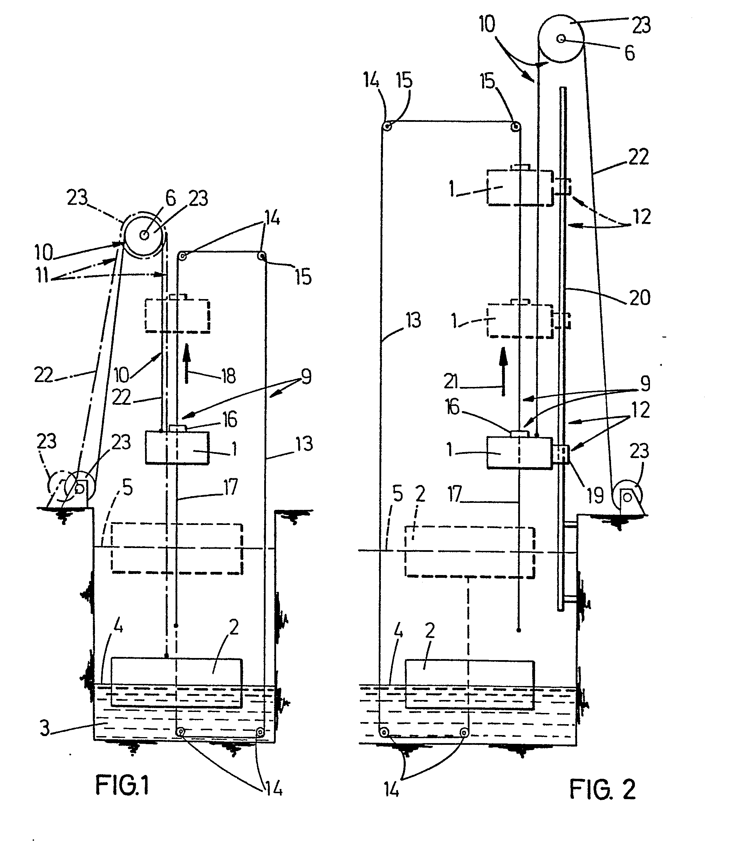

Le procédé de transformation d'énergie hydraulique suivant l'invention et illustré aux dessins consiste à associer un poids 1 à un flotteur 2 plongé dans un liquide 3 à niveau variable, qui passe successivement d'un minimum 4 à un maximum 5, au moment où ledit liquide est à son niveau minimum, à élever ce poids 1 à l'aide du flotteur 2 pendant le passage du liquide du niveau 4 au niveau 5, à libérer le poids 1 du flotteur 2 lorsque le poids a été élevé à une hauteur déterminée et au plus tard au moment où le flotteur a atteint le niveau maximum 5 et à autoriser la descente du poids 1, sous l'effet de la pesanteur et indépendamment du niveau du liquide, qui entraîne l'arbre 6 en rotation pour récupérer l'énergie produite par cette descente - voir figure 1 où le flotteur et le poids sont représentés en traits pleins dans la position qu'ils occupent lorsque le liquide est à son niveau minimum 4 et en traits interrompus quand le liquide atteint son niveau maximum 5. Le procédé suivant l'invention consiste également à récupérer l'énergie produite par la descente du flotteur quand
le niveau de liquide passe du niveau 5 au niveau 4,
ledit flotteur 2 entraînant, tout comme le poids 1,
l'arbre 6 en rotation (voir figure 1).

Le procédé suivant l'invention prévoit, comme
montré à la figure 2, l'accumulation d'énergie en élevant le poids 1 en plusieurs étapes, au cours de plusieurs montées successives du flotteur 2, avant d'autoriser sa descente pour qu'il restitue l'énergie
emmagasinée. Pour ce faire, on bloque le poids 1 libéré du
flotteur au niveau où il a été amené par le flotteur
quand le liquide a atteint son niveau maximum, on associe
à nouveau le poids au flotteur quand le liquide est à
son niveau minimum, on débloque ledit poids pour qu'il
subisse une nouvelle élévation pendant que le liquide
passe de son niveau minimum à son niveau maximum et
on recommence l'opération jusqu'à ce que le poids 1 a
atteint la hauteur déterminée. A la figure 2, le poids
1 et le flotteur 2 sont représentés en traits pleins
dans la position qu'ils occupent lorsque le liquide est
à son niveau minimum et que le poids se trouve dans sa
position la plus basse, le flotteur 2 étant représenté
en traits interrompus dans la position qu'il occupe
quand le liquide est à son niveau maximum tandis que
le poids est représenté, en traits interrompus, dans
les deux positions qu'il occupe après une première
montée et une deuxième montée successives dudit flotteur 2.

Suivant l'invention, on pourrait également, pour
accumuler de l'énergie tout en utilisant une partie de
l'énergie fournie au poids à chacune de ses élévations,
régler le mouvement de descente du poids 1 libéré du flotteur 2 quand le liquide a atteint son niveau maximum pour que l'amplitude de ce mouvement soit inférieure à l'amplitude du mouvement de montée du poids précédant la descente de ce dernier, récupérer l'énergie produite par la descente du poids, associer à nouveau le poids au flotteur quand le liquide est à son niveau minimum pour élever ledit poids quand le liquide passe de son niveau minimum à son niveau maximum et recommencer l'opération jusqu'à ce que le poids 1 ait atteint une hauteur déterminée.

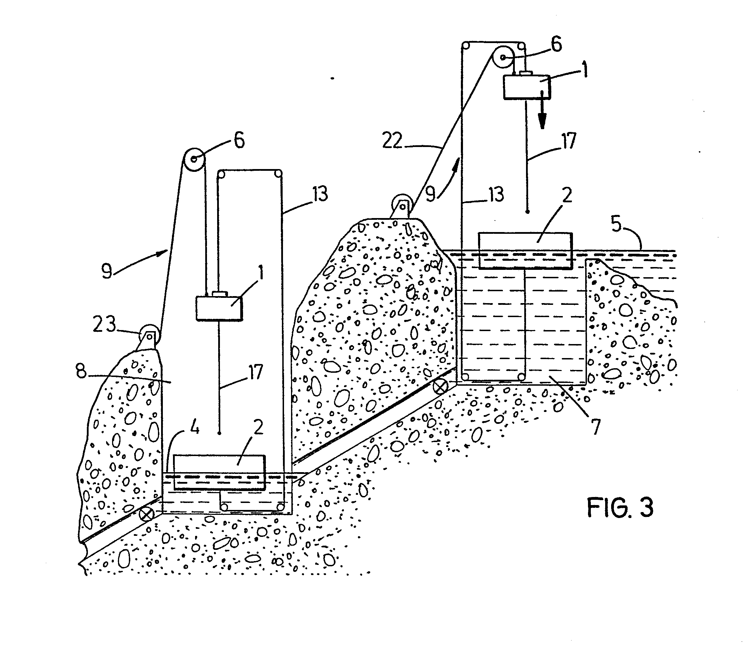

Comme illustrée à la figure 3, le procédé suivant l'invention permet également la transformation en continu de l'énergie hydraulique. Pour permettre cette transformation en continu, on prévoit au moins deux réservoirs 7 et 8 reliés entre eux pour que le niveau de liquide soit maximum dans l'un quand il est minimum dans l'autre et vice versa et on dispose dans chacun de ces réservoirs un flotteur 2 associé à un poids 1 de sorte que le poids libéré, quand le liquide a atteint son niveau maximum dans un des réservoirs, descend pour céder son énergie pendant que le poids de l'autre réservoir s'élève entraîné par son flotteur.

L'installation pour la mise en oeuvre du procédé suivant l'invention et représentée aux dessins est donc implantée dans un site où un liquide 3 subit des variations de niveau successives et en sens contraires, cette installation comprend au moins un flotteur 2 pouvant suivre les variations de niveau du liquide, au moins un poids 1 pouvant être mis en mouvement par le flotteur 2, des moyens de liaison 9 du poids 1 au flotteur 2 agencés pour élever le poids à chaque mouvement ascendant du flotteur et pour libérer le poids lorsque ce dernier a atteint une hauteur déterminée et au plus tard au
moment ou le flotteur amorce chacun de ses mouvements
descendants et des moyens 10 associés au poids et agencés pour récupérer l'énergie produite par la descente
de ce dernier.

Suivant l'invention, cette installation peut
également présenter, comme montré à la figure 1, des
moyens 11, représentés en traits interrompus, agencés pour
récupérer l'énergie produite par la descente du flotteur
2.

Dans le cas où l'installation susdite est prévue
comme montré à la figure 2, pour accumuler de l'énergie,
elle comprend des moyens de blocage 12 prévus pour immobiliser le poids 1 dès que celui-ci est libéré des
moyens de liaison 9 , ces derniers étant agencés pour
élever le poids 1 jusqu'à une hauteur déterminée, à
partir du niveau atteint à chacune des immobilisations
du poids, à chacun des mouvements ascendants du flotteur
2, lesdits moyens de blocage 12 étant agencés pour libérer le poids dès que le flotteur 2 amorce son mouvement
ascendant.

Les moyens de liaison 9 susdits comprennent
un câble 13 passant sur des poulies 14 tournant autour
d'arbres fixes 15, les extrémités du câble étant reliées
aux flotteur 2 et poids 1 pour que ceux-ci s'élèvent
lors de la montée du flotteur, et un dispositif 16,
connu en soi et non représenté en détail, qui est fixé
au poids et qui emprisonne le brin de câble 17 associé
au poids lorsqu'une traction est exercée sur ledit brin
par le flotteur, suivant la flèche 18, dès que ce dernier amorce son mouvement ascendant et libérant ce brin de
câble, pour libérer le poids par rapport au flotteur, dès que la traction sur le brin 17 cesse quand le flotteur a atteint son niveau maximum 5.

Les moyens de blocage 12 précités du poids 1 comprennent, comme montré à la figure 2, un dispositif 19, connu en soi, non représenté en détail et du type frein de secours utilisé notamment dans les ascenceurs, coopérant avec une tige fixe 20 disposée parallèlement à la direction de déplacement du poids, ce dispositif autorisant le déplacement du poids 1 dans le sens montée, suivant la flèche 21, lorsqu'il est entraîné par le flotteur 2 et bloquant le déplacement du poids, dans le sens descente, lorsque ce dernier est libre par rapport au flotteur. Ce dispositif 19 est pourvu d'une commande mettant ses organes de blocage hors circuit de manière à permettre la descente du poids 1 quand ce dernier a atteint une hauteur déterminée.

Les moyens 10 et 11 associés aux poids 1 et flotteur 2 pour récupérer l'énergie produite par leur descente sont avantageusement constitués par un système transformant le mouvement linéaire du poids et du flotteur en un mouvement circulaire, système , comme montré aux figures 1 à 3, tel qu'un câble 22 coopérant avec une poulie 23 calée sur l'arbre 6 qu'elle entraîne, une des extrémités de ce câble 22 étant fixée au poids 1 et au flotteur 2 tandis que son autre extrémité coopère avec un dispositif connu 23 assurant la tension du câble pendant la montée du poids et du flotteur.

L'installation suivant l'invention peut être utilisée seule ou en combinaison avec d'autres installations de transformation d'énergie hydraulique. C'est ainsi que l'installation pourrait avantageusement être combinée aux usines marémotrices dans lesquelles on pompe de l'eau en fin de cycle pour allonger les périodes de production, ladite installation permettant par exemple de procurer l'énergie nécessaire au pompage de l'eau et qui est fournie par les marées, plutôt que d'utiliser une partie de l'énergie transformée dans ces usines pour ledit pompage.

Il doit être entendu que l'invention n'est nullement limitée aux formes de réalisation décrites et que bien des modifications peuvent être apportées à ces dernières sans sortir du cadre du présent brevet.

REVENDICATIONS.

1. Procédé de transformation d'énergie hydraulique, caractérisé en ce qu'on associe au moins un poids (1) à au moins un flotteur (2), plongé dans un liquide (3) à niveau variable passant successivement d'un minimum (4) à un maximum (5) et vice versa, quand le liquide est à son niveau minimum (4), on élève ce poids (1) à l'aide du flotteur (2) grâce à la montée du liquide, on libère ce poids du flotteur, avant la descente du liquide, lorsque ledit poids a été amené à une hauteur déterminée et on autorise la descente du poids qui s'effectue sous l'effet de la pesanteur et indépendamment du niveau du liquide et on récupère l'énergie produite par cette descente.

2. Procédé suivant la revendication 1, caractérisé en ce que, pour accumuler de l'énergie, on bloque le poids (1) libéré du flotteur (2) au niveau où il a été amené par ce flotteur quand le liquide a atteint son niveau maximum (5), on associe à nouveau le poids au flotteur quand le liquide est à son niveau minimum (4), on débloque le poids pour qu'il subisse une nouvelle élévation pendant que le liquide passe de son niveau minimum à son niveau maximum et on recommence l'opération jusqu'à ce que le poids ait atteint une hauteur déterminée.

3. Procédé suivant la revendication 1, caractérisé en ce que, pour accumuler de l'énergie, on règle le mouvement de descente du poids (1) libéré du flotteur (2) quand le liquide a atteint son niveau maximum (5) pour que l'amplitude de ce mouvement soit inférieure à l'amplitude du mouvement de montée du poids précédant la descente de ce dernier, on récupère l'énergie produite par la descente du poids, on associe à nouveau le poids au flotteur quand le liquide est à son niveau minimum (4) pour élever ledit poids pendant que le liquide passe de son niveau minimum à son niveau maximum et on recommence l'opération jusqu'à ce que le poids ait atteint une hauteur déterminée.

4. Procédé suivant la revendication 1, caractérisé en ce que, pour transformer l'énergie hydraulique en continu, on prévoit au moins deux réservoirs (7 et 8) reliés entre eux pour que le niveau de liquide soit maximum dans l'un quand il est minimum dans l'autre et vice versa et on dispose dans chacun de ces réservoirs au moins un flotteur (2) associé à au moins un poids (1) de sorte que le poids libéré, quand le liquide a atteint son niveau maximum dans un des réservoirs, descend pour céder son énergie pendant que le poids de l'autre réservoir s'élève entraîné par son flotteur.

5. Procédé suivant l'une quelconque des revendications 1 à 4, caractérisé en ce que l'on récupère l'énergie produite par la descente du flotteur lorsque le liquide passe d'un niveau maximum (5) à un niveau minimum (4).

6. Installation pour la mise en oeuvre du procédé suivant l'une quelconque des revendications 1 à 5, implantée dans un site où un liquide (3) subit des variations de niveau successives et en sens contraires, ladite installation étant caractérisée en ce qu'elle comprend au moins un flotteur (2) pouvant suivre les variations de niveau du liquide, au moins un poids (1) pouvant être mis en mouvement par le flotteur, des moyens de liaison (9) du poids au flotteur agencés pour élever le poids à chaque mouvement ascendant du flotteur et pour libérer le poids lorsque ce dernier a atteint une hauteur déterminée et au plus tard au moment où le flotteur amorce chacun de ses mouvements descendants et des moyens (10) associés au poids et agencés pour récupérer l'énergie produite par la descente de ce dernier.

7. Installation suivant la revendication 6, caractérisée en ce qu'elle comprend des moyens de blocage (12) prévus pour immobiliser le poids (1) dès que celui-ci est libéré des moyens de liaison (9), ces derniers moyens étant agencés pour élever le poids (1) jusqu'à une hauteur déterminée, à partir du niveau atteint à chacune des immobilisations du poids, à chacun des mouvements ascendants du flotteur (2), lesdits moyens de blocage (12) étant agencés pour libérer le poids dès que le flotteur amorce son mouvement descendant.

8. Installation suivant l'une ou l'autre des revendications 6 et 7, caractérisée en ce que les moyens de liaison (9) du flotteur (2) au poids (1) comprennent un câble (13) passant sur des poulies (14) et dont les extrémités sont reliées auxdits flotteur (2) et poids (1) pour que ceux-ci s'élèvent lors de la montée du flotteur et un dispositif (16), connu en soi, fixé au poids (1), emprisonnant le brin de câble (17) associé au poids lorsqu'une traction est exercée sur ledit brin par le flotteur (2) dès que ce dernier amorce son mouvement ascendant et libérant ce brin de câble (17), pour libérer le poids (1) par rapport au flotteur (2), dès que la traction sur le brin cesse quand le flotteur a atteint son niveau maximum (5).

9. Installation suivant l'une ou l'autre des revendications 7 et 8, caractérisée en ce que les moyens de blocage (12) comprennent un dispositif (19), connu en soi, du type frein de secours utilisé dans les ascenseurs, coopérant avec une tige (20) disposée parallèlement à la direction de déplacement du poids, ce dispositif autorisant le déplacement du poids (1) dans le sens montée lorsqu'il est entraîné par le flotteur (2) et bloquant le déplacement du poids, dans le sens descente, lorsque ce dernier est libre par rapport au flotteur, des moyens étant prévus pour mettre ce dispositif hors circuit pour permettre la descente du poids quand celui-ci a atteint la hauteur déterminée susdite.

10. Installation suivant l'une quelconque des revendications 6 à 9, caractérisée en ce qu'elle comprend des moyens (11) associés au flotteur (2) et agencés pour récupérer l'énergie produite par la descente de celui-ci.

11. Installation suivant la revendication 10, caractérisée en ce que les moyens (10 et 11) associés au poids (1) et au flotteur (2) et agencés pour récupérer l'énergie produite par la descente de ceux-ci sont constitués par un système transformant le mouvement linéaire du poids en mouvement circulaire.

FIG.1        FIG. 2

FIG. 3

Office européen
des brevets

**RAPPORT DE RECHERCHE EUROPEENNE**

EP 83 87 0079

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,A | FR-A-2 259 250 (REID)<br><br>* Page 5, ligne 34 - page 9, ligne 15; figures 1,2 *<br><br>--- | 1,5-8, 10 | F 03 B 13/12 |
| A | US-A-3 894 241 (KAPLAN)<br><br>* Colonne 1, ligne 25 - colonne 2, ligne 39 *<br><br>--- | 1,2,4, 6-9,11 | |
| A | FR-A- 472 911 (ROBERT)<br><br>* Page 1, ligne 12 - page 2, ligne 30 *<br><br>----- | 5,10, 11 | |

DOMAINES TECHNIQUES RECHERCHES (Int. Cl. ³)

F 03 B

Le présent rapport de recherche a été établi pour toutes les revendications

| Lieu de la recherche | Date d'achevement de la recherche | Examinateur |
|---|---|---|
| LA HAYE | 22-11-1983 | DE WINTER P.E.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82